**Europäisches Patentamt**

**European Patent Office**

**Office européen des brevets**

(11) Veröffentlichungsnummer: **0 372 102 B2**

(12) **NEUE EUROPÄISCHE PATENTSCHRIFT**

㊺ Veröffentlichungstag der neue Patentschrift:
**29.11.95**

(21) Anmeldenummer: **88120180.0**

(22) Anmeldetag: **02.12.88**

(51) Int. Cl.6: **F02P 5/15**

(54) Verfahren zur Steuerung des Zündwinkels einer Brennkraftmaschine.

(43) Veröffentlichungstag der Anmeldung:
**13.06.90 Patentblatt 90/24**

(45) Bekanntmachung des Hinweises auf die Patenterteilung:
**15.09.93 Patentblatt 93/37**

(45) Bekanntmachung des Hinweises auf die Entsheidung über den Einspruch:
**29.11.95 Patentblatt 95/48**

(84) Benannte Vertragsstaaten:
**DE ES FR GB IT**

(56) Entgegenhaltungen:
**EP-A- 0 233 449      EP-A- 0 284 054
EP-B- 7 998           DE-A- 2 801 641
DE-A- 3 011 058       DE-C- 2 917 888
FR-A- 2 531 145       GB-A- 2 069 603
US-A- 4 498 438**

(73) Patentinhaber: **SIEMENS AKTIENGESELL-SCHAFT
Wittelsbacherplatz 2
D-80333 München (DE)**

(72) Erfinder: **Dietl, Norbert, Dipl.-Inform. (FH)
A. Waldmünchener Strasse 57
D-8400 Regensburg (DE)**

**Beschreibung**

Die Erfindung betrifft ein Verfahren zur Steuerung des Zündwinkels einer Brennkraftmaschine gemäß Oberbegriff von Anspruch 1.

In der DE-C- 29 17 888 ist ein Verfahren beschrieben, bei dem nach Beendigung eines Sonderbetriebs - Schub - der Zündwinkel verzögert wird und danach während eines Übergangsbetriebs gemäß Übergangswerten auf die Normalwerte für den Normalbetrieb rückgesteuert wird. Diese Übergangswerte werden dabei taktweise jeweils um einen bestimmten Betrag erhöht, bis die Normalwerte erreicht sind. Der graphische Verlauf dieser Übergangswerte folgt also einer linearen Funktion.

Damit soll ein weicherer Übergang vom Schub auf den Normalbetrieb erreicht werden. Wählt man für diese lineare Funktion eine flache Steigung, so ergibt sich ein sehr weicher Übergang, der aber länger dauert. Wählt man dagegen eine große Steigung, so ist der Übergang härter, aber die Zeit wird kürzer. Ein Kompromiß zwischen diesen beiden Extremen ist indes schwierig zu finden, da auch die Normalwerte einer bestimmten Funktion folgen, die je nach den vorliegenden Betriebsbedingungen sehr unterschiedlich verlaufen kann. Demnach kann sich bei einer gewählten Steigung einmal ein sehr harter und einmal ein sehr weicher Übergang ergeben.

Die Aufgabe der Erfindung liegt darin, die Übergangswerte so zu wählen, daß sich immer ein optimaler Übergang auf die Normalwerte ergibt.

Die erfindungsgemäße Lösung ist im Anspruch 1 gekennzeichnet.

Die erfindungsgemäße Lösung geht von der Überlegung aus, daß der Übergangsbetrieb ausgehend von einem letzten Sonderwert unabhängig von der Größe der Normalwerte immer gleich lang dauern sollte, bzw. nach einer gleichgroßen Anzahl von Takten abgeschlossen sein sollte. Dies wird erreicht, indem die Übergangswerte an den Verlauf der Normalwerte angepaßt werden. Die Differenz Normalwert minus Übergangswert wird bei jedem Takt um einen bestimmten Betrag verkleinert. Die Zahl der Takte bis diese Differenz gleich Null wird, ist also bei einer bestimmten Anfangsdifferenz unabhängig von der Größe der Normalwerte immer gleich. Diese Zahl wird bestimmt durch den Betrag, um den die Differenz bei jedem Takt verkleinert wird.

Mit dem erfindungsgemäßen Verfahren wird also das Drehmoment kontinuierlich aufgebaut, da die Übergangswerte zur Steuerung des Zündwinkels auf die Normalwerte bezogen sind und damit unabhängig sind von Änderungen des Betriebszustands der Brennkraftmaschine.

Die Erfindung wird anhand der Figuren näher erläutert. Dabei zeigen

Figur 1    eine Prinzipdarstellung für eine Einrichtung zur Durchführung des Verfahrens,

Figur 2    ein Zündwinkeldiagramm für verschiedene Betriebsfälle und

Figur 3    ein Flußdiagramm zur Bestimmung von Übergangswerten.

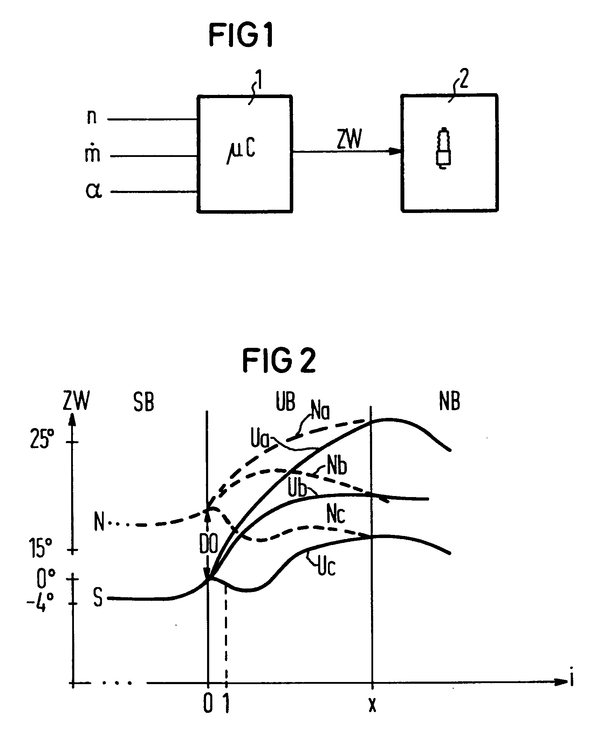

In Figur 1 ist mit 1 ein Mikrocomputer bezeichnet, dem Eingangssignale zugeführt sind, die den Werten für eine Drehzahl n, eine Luftmenge m und einen Drosselklappenwinkel α einer Brennkraftmaschine entsprechen. Der Mikrocomputer 1 berechnet daraus Normalwerte N für einen Normalbetrieb NB der Brennkraftmaschine, gemäß denen er einen Zündwinkel ZW steuert. Dies ist in Figur 1 über eine Wirkverbindung zu einer Zündeinrichtung 2 angedeutet.

Während eines Sonderbetriebs SB der Brennkraftmaschine, wie z.B. beim Schub oder bei Schaltvorgängen bei automatischen Getrieben, steuert der Mikrocomputer 1 den Zündwinkel ZW gemäß Sonderwerten S. Im Falle des Schubbetriebs sind z. B. diese Sonderwerte S gegenüber den Normalwerten N so verschoben, daß ein späterer Zündwinkel ZW gesteuert wird und sich so eine gewünschte Drehmomentreduzierung beim Schub ergibt.

Nach Beendigung dieses Sonderbetriebs SB wird der Zündwinkel ZW gemäß Übergangswerten U gesteuert, die so gewählt sind, daß sich das Drehmoment kontinuierlich, also ruckfrei wieder aufbaut.

In Figur 2 sind Zündwinkelwerte am Beispiel eines Schubbetriebs, mit einem daran anschließenden Übergangs- und Normalbetrieb in einem Diagramm dargestellt. Auf der Abszisse sind dabei Takte i aufgetragen und auf der Ordinate der jeweils zugehörige Zündwinkel ZW. Die Takte i werden kurbelwellensynchron z.B. für eine Sechszylindermaschine alle 120° erzeugt.

Von links nach rechts beginnend soll bis zu dem mit Null bezeichneten Takt der Sonderbetrieb SB - Schub - vorliegen, daran anschließend der Übergangsbetrieb UB, der bei dem mit x bezeichneten Takt endet und schließlich wieder der Normalbetrieb NB. Die Normalwerte N, Sonderwerte S und Übergangswerte U sind dabei zur besseren Übersichtlichkeit nicht punktweise, sondern als Verlauf dargestellt. Die durchgezogenen Verläufe sind dabei diejenigen Werte, gemäß denen der Zündwinkel ZW gesteuert wird und die gestrichelten Verläufe zeigen die jeweils zugehörigen Normalwerte N.

Dementsprechend wird der Zündwinkel ZW während des Schubbetriebs gemäß den Sonderwerten S gesteuert. Ein typischer Bereich für diese Sonderwerte S liegt bei ungefähr 0 bis - 4° Spätzündung. Der Bereich der Normalwerte N liegt demgegenüber bei ungefähr 15° bis 25° Frühzündung.

Nach Beendigung des Schubbetriebs beim Takt Null muß nun der gemäß den Sonderwerten S gesteuerte Zündwinkel ZW während des Übergangsbetriebs UB auf die Normalwerte N zurückgesteuert werden. Dazu berechnet der Mikrocomputer 1 eine Anfangsdifferenz DO aus dem Normalwert NO und dem Sonderwert SO beim Takt O.

Die folgenden Übergangswerte U bestimmen sich dann aus den jeweiligen Normalwerten N abzüglich der bei jedem Takt um eine Konstante A verminderten Anfangsdifferenz DO.

Der Verlauf der Normalwerte N kann je nach den Betriebsbedingungen der Brennkraftmaschine sehr unterschiedlich sein. In Figur 2 sind deshalb für diesen Verlauf drei Varianten, Na, Nb und Nc eingetragen. Die jeweils daraus resultierenden Verläufe für die Übergangswerte Ua, Ub und Uc sind ebenfalls dargestellt.

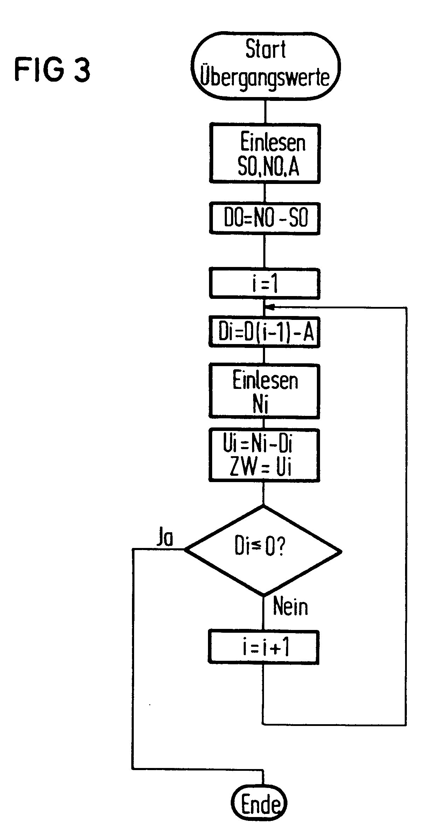

Das Flußdiagramm gemäß Figur 3 zeigt die genaue Berechnung dieser Übergangswerte U. Nach dem Ende des Schubbetriebs wird der Programmlauf gestartet und im nächsten Schritt der Sonderwert SO, der Normalwert NO beim Takt O sowie die Konstante A eingelesen. Diese Konstante A kann beispielsweise 1° oder 2° sein.

Im nächsten Schritt wird die Anfangsdifferenz DO aus NO und SO berechnet und dann die Taktlaufvariable i für die Berechnung des ersten Übergangswerts UI gleich Eins gesetzt.

Im folgenden Schritt wird dann bei diesem ersten Programmdurchlauf eine Differenz DI aus der Anfangsdifferenz DO und der Konstanten A gebildet. Nach dem Einlesen des Normalwerts NI für diesen ersten Takt kann dann im nächsten Schritt der Übergangswert UI aus der Differenz des Normalwerts NI und der Differenz DI berechnet werden. Der Zündwinkel ZW wird dann gemäß diesem Übergangswert UI gesteuert.

Darauf folgt die Abfrage, ob die Differenz DI kleiner gleich Null ist. Wenn ja, so bedeutet das, daß der gerade berechnete Übergangswert UI bereits die Größe des zugehörigen Normalwerts NI erreicht oder überschritten hat. In diesem Fall ist der Übergangsbetrieb UB abgeschlossen und der Programmlauf wird beendet. Danach wird der Zündwinkel ZW in üblicher Weise gemäß den Normalwerten N gesteuert, wie in Figur 2 zu sehen ist.

Ist die Antwort bei der Abfrage dagegen Nein, so müssen weitere Übergangswerte Ui berechnet werden. Dazu wird die Taktlaufvariable i um Eins erhöht und es folgen wieder die Schritte ab der Berechnung einer neuen Differenz D2.

**Patentansprüche**

1. Verfahren zur Steuerung des Zündwinkels (ZW) einer Brennkraftmaschine während eines Übergangsbetriebs (UB) zwischen einem Sonderbetrieb (SB) und einem Normalbetrieb (NB), wobei der Zündwinkel (ZW) taktweise gesteuert wird,
   - während des Normalbetriebs (NB) gemäß Normalwerten (N), abhängig von Drehzahl (n) und Luftmenge (m),
   - während des Sonderbetriebs (SB) gemäß Sonderwerten (S), abhängig von dem jeweiligen Sonderbetrieb (SB), und
   - während eines Übergangsbetriebs (UB) nach Beendigung des Sonderbetriebs (SB) gemäß Übergangswerten (U),

   **dadurch gekennzeichnet,**
   daß die Übergangswerte (U) sich aus der Beziehung $Ui = Ni - Di$ ergeben,
   - wobei i eine Taktlaufvariable (0, 1, 2 ...x) ist, die bei dem Takt beginnt, bei dem der Zündwinkel (ZW) gemäß dem letzten Sonderwert (SO) gesteuert wurde,
   - wobei DO eine Anfangsdifferenz aus dem dem letzten Sonderwert (SO) zugehörigen Normalwert (NO) und diesem letzten Sonderwert (SO) ist,
   - wobei $Di = D(i-1) - A$ ist, mit A als einer wählbaren Konstanten, und

   daß der Übergangsbetrieb (UB) beendet wird, wenn Di kleiner oder gleich Null ist.

2. Verfahren nach Anspruch 1, **dadurch gekennzeichnet,**
   daß die taktweise Steuerung gemäß Taktimpulsen in Abhängigkeit von der Drehbewegung der Kurbelwelle erfolgt.

**Claims**

1. Method for controlling the ignition angle (ZW) of an internal combustion engine during a transition mode (UB) between a special mode (SB) and a normal mode (NB), the ignition angle (ZW) being controlled in clocked fashion,
   - according to normal values (N) during the normal mode (NB) as a function of the engine speed (n) and air flow rate (m),
   - according to special values (S) during the special mode (SB) as a function of the respective special mode (SB) and
   - according to transition values (U) during a transition mode (UB) after the termination of the special mode (SB),

   characterized in that the transition values (U) result from the relation $Ui = Ni - Di$,

- i being a clock running variable (0, 1, 2 ...x) which starts at the clock at which the ignition angle (ZW) was controlled according to the last special value (SO),
- DO being an initial difference derived from the normal value (NO) associated with the last special value (SO) and this last special value (SO) and
- Di = D(i-1) - A, where A is a selectable constant

and the transition mode (UB) is terminated when Di is smaller than or equal to zero.

2. Method according to Claim 1, characterised in that the clocked control takes place according to clock pulses as a function of the rotary movement of the crankshaft.

**Revendications**

1. Procédé de commande de l'angle d'allumage (ZW) d'un moteur à combustion interne pendant un fonctionnement transitoire (UB) entre un fonctionnement particulier (SB) et un fonctionnement normal (NB), l'angle d'allumage (ZW) étant commandé d'une manière cadencée
   - pendant le fonctionnement normal (NB) conformément à des valeurs normales (N) en fonction de la vitesse de rocation (n) et de la quantité d'air (m),
   - pendant le fonctionnement particulier (SB) conformément à des valeurs particulières (S), en fonction du fonctionnement particulier respectif (SB), et
   - pendant un fonctionnement transitoire (UB) à la fin du fonctionnement particulier (SB), conformément à des valeurs transitoires (U),

   caractérisé par le fait
   que les valeurs transitoires (U) sont obtenues à partir de la relation Ui = Ni - Di,
   - i étant une variable courante de cadence (0, 1, 2, ...), qui commence à la cadence, pour laquelle l'angle d'allumage (ZW) a été commandé conformément à la dernière valeur particulière (SO).
   - DO une différence initiale entre la valeur normale (NO), associée à la dernière valeur particulière (SO), et cette dernière valeur particulière (SO), et
   - Di = D(i-1) - A, A étant une constante pouvant être sélectionnée, et

   que le fonctionnement transitoire (UB) est arrêté lorsque Di est inférieure ou égale à zéro.

2. Procédé suivant la revendication 1, caractérisé par le fait que la commande cadencée s'effectue conformément à des impulsions de cadence en fonction de la vitesse du mouvement de rotation du vilebrequin.

# FIG 1

n ———

ṁ ———

α ———

μC _1_

ZW →

_2_

# FIG 2

ZW

SB    UB  Na    NB

25°    Ua      Nb

N    Ub

15°    Nc

0°    Uc

-4°   S

DO

0 1    x    i

**FIG 3**

Start
Übergangswerte

Einlesen
S0,N0,A

D0=N0-S0

i=1

Di=D(i-1)-A

Einlesen
Ni

Ui=Ni-Di
ZW=Ui

Di≤0?

Ja

Nein

i=i+1

Ende